# EUROPEAN PATENT SPECIFICATION

(11) **EP 0 813 786 B1**
(45) Date of publication and mention of the grant of the patent: **17.05.2006**
(21) Application number: 96902355.5
(22) Date of filing: 14.02.1996
(51) Int. Cl.: H04M 11/04, G10L 11/00, G08B 21/00, G08B 25/00

(54) **PERSONAL ATTACK ALARMS**
PERSONENÜBERFALLALARME
ALARMES ANTI-ATTAQUE CORPORELLE

(30) Priority: 15.02.1995 GB 9502973
(43) Date of publication of application: 29.12.1997
(73) Proprietor: Maxton, Canan, Regents Park, London NW1 4HG (GB)
(72) Inventor: Maxton, Canan, Regents Park, London NW1 4HG (GB)
(74) Representative: Beresford, Keith Denis Lewis
(86) International application number: PCT/GB1996/000315
(87) International publication number: WO 1996/025818

(56) References cited:
- EP-A- 0 532 826
- WO-A-94/22262
- DE-A- 3 529 167
- DE-A- 4 424 735
- GB-A- 2 106 354
- US-A- 5 223 844

## Description

This invention relates to personal attack alarms.

Alarm systems are known which are installed in buildings and which, in addition to various forms of sensor, such as magnetic switch sensors for sensing doors being opened, vibration sensors for sensing vibration of windows and motion detectors for sensing the presence of an intruder in a room, include so-called personal attack buttons. These are conventionally positioned in locations where an individual in the building might be most likely to suffer a personal attack, such as just inside a main door to the building or in a bedroom. It is conventional for such systems to be connected to a central monitoring station to which alarm signals are transmitted in response to detection of an alarm condition so that the personnel at the central station may inform the police who may then investigate the source of the alarm condition. Where a personal attack button is pressed, the signal generated is indicative of this so that the personnel at the central monitoring station can inform the police of the urgency of the situation.

The problem with personal attack buttons is that they are only useful where the individual under attack is able to reach the button and press it. Published German patent application DE 3529167A1 proposes an alarm unit for installation in security zones, such as banks, which includes a speech recognition system which is programmed for recognising a number of words which might be used in conversation with an intruder, and for generating an alarm in response thereto, so that the alarm can be generated without alerting the intruder. This is a sophisticated system designed for specific security locations. It suffers from the problem that it is not suitable for personal use.

The invention solves this problem by providing a telephone characterised in that it incorporates an alarm providing means which is operable with the telephone in standby mode, the alarm providing means comprising a microphone, voice recognition means coupled to the microphone and programmable to recognise a predetermined sound uttered by a person, means for generating an alarm signal in response to recognition of said predetermined sound, and automatic dialing means for dialing a predetermined telephone number in response to generation of said alarm signal. The telephone may be a mobile telephone or a telephone of the type designed to be used at a particular location, in which case it may be of the cordless or non-cordless type. Upon connection to a central alarm monitoring station, the individual under attack can, where the telephone is a mobile telephone, attempt to inform the personnel at the central monitoring station of his or her location so that the appropriate police may be alerted. Where the telephone is at a fixed location, for example in a house, the system can be arranged so that the monitor station is automatically informed of the location of the telephone generating the alarm.

The disclosure of US patent 5,223,844 is acknowledged in which a complex mobile system is provided employing the cellular telephone network for the transmission of alarm signals, but not disclosing or suggesting a telephone with the combination of features constituting the present invention.

The invention is described further by way of example with reference to the accompanying drawings, in which:
Fig. 1 is a block diagram of an alarm system embodying the invention;
Fig. 2 is a simplified block diagram of a personal attack sensor included in the system of Fig. 1 and for installation in a building; and
Fig. 3 is a simplified block diagram of a personal attack sensor in accordance with the invention as incorporated in a telephone and included in the system of Fig. 1.

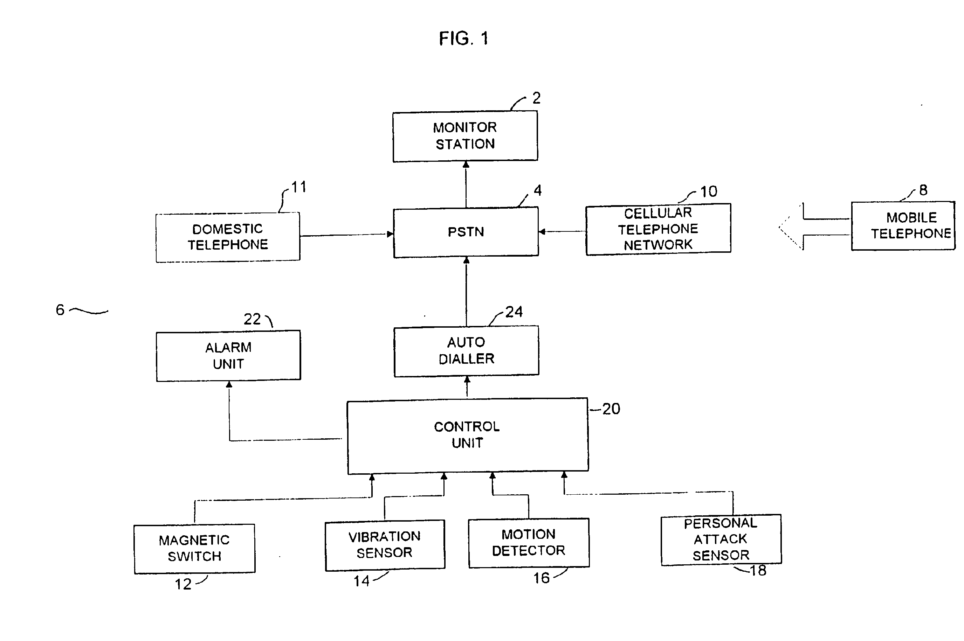

With reference to Fig. 1, the alarm system shown comprises a central monitor station 2 for receiving and monitoring alarm signals supplied thereto through the public switched telephone network 4. As is conventional, the central station 2 may be arranged to monitor alarm signals generated by a large number of different alarm apparatus each installed in a different building so that alarm conditions in the different buildings can be detected. One such alarm apparatus is represented by reference number 6 in Fig. 1 and, as shown, this is connected to the PSTN 4. Additionally, the monitor station 2 is arranged for detecting alarm signals generated by a mobile telephone 8 and supplied to the PSTN 4 through a cellular telephone network 10, and for detecting alarm signals generated by a telephone 11 of the non-mobile type, for example located in a house or apartment. The telephone 11 may be of the cordless or non-cordless type.

The apparatus 6 comprises one or more magnetic switch sensors 12, for example each for sensing a door being opened, one or more vibration sensors 14, for example each for sensing vibration of a window as would arise if a burglar were attempting to break in through a window, and one or more motion detectors 16 each operable to detect movement in a designated area or areas, such as different rooms, in the building. Each of the sensors 12, 14 and 16 may be of conventional design. In addition, the apparatus 6 includes one or more personal attack sensors 18.

The sensors 12, 14, 16 and 18 are all connected to a control unit 20 which is arranged, in response to receipt of an alarm signal from any of the sensors 12, 14, 16 and 18, to activate both a local alarm unit 22 mounted on or adjacent the building for giving a visible and/or audible alarm, and an auto-dialler unit 24 which is connected to the PSTN 4 for dialling the telephone number of the monitor station 2 and sending thereto an alarm signal which, as is conventional, may indicate which of the sensors 12, 14, 16 and 18 has detected an alarm condition. In response to the alarm signal, the personnel at the central monitoring station 2 may, as is conventional, inform the appropriate police department.

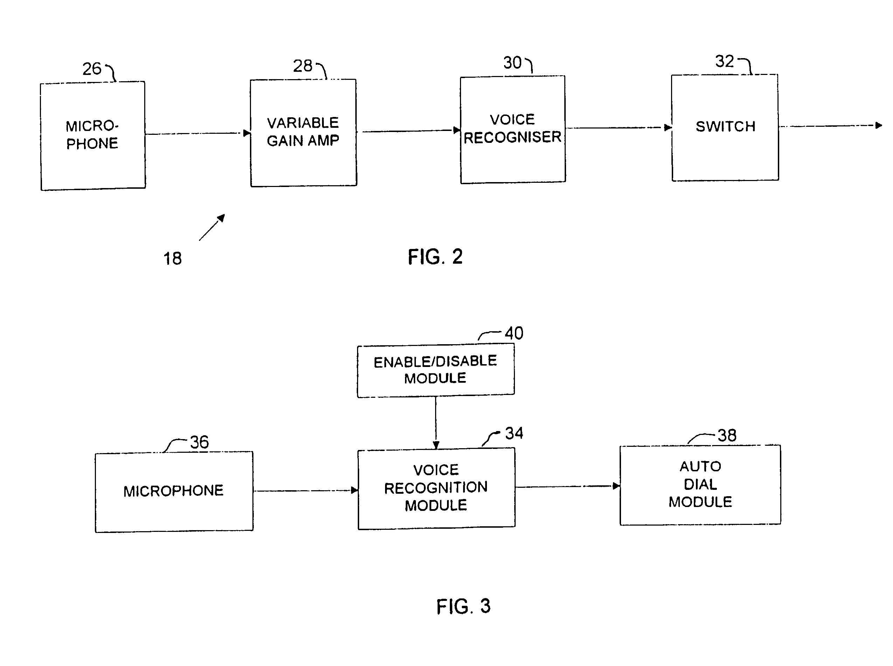

As shown in Fig. 2, the personal attack sensor 18 comprises a microphone 26 whose output is supplied via a variable gain amplifier 28 to a voice recognition unit 30. The voice recognition unit is programmable to recognise a predetermined word uttered by a predetermined individual and is arranged, in response to detection of such word by such individual, to actuate a switch 32 through which the alarm signal is supplied to the control unit 20. Accordingly, when the apparatus 6 is set up, the voice recogniser 30 will be arranged to recognise predetermined words by predetermined voices. Adjustment of the variable gain amplifier 28 enables the amplitude of the signal supplied to the voice recogniser 30 to be adjusted so that the sensitivity of the system may be adjusted and/or the system made responsive only to the predetermined word being spoken or shouted at a predetermined volume. As a preferred example, the sensor illustrated in Fig. 2 will be arranged to recognise the word "help" shouted by the relevant individual or individuals.

Preferably, the apparatus 6 includes a number of personal attack sensors 18 positioned around the building so that an individual under attack anywhere in the building will be able to activate the alarm system by shouting for help.

Preferably, the voice recogniser 30 is a digital device utilising conventional voice and/or speech recognition techniques. Thus the recogniser 30 is provided with means for digitising and storing the signals generated by the microphone in response to one or more individuals uttering a cry for "help" or other word and for thereafter recognising such cry or other word.

With reference to Fig. 3, the telephones 8 and 11 each include a voice recognition module 34 which receives signals from microphone 36, which is preferably the conventional microphone of the telephone, an auto-dial module 38 and an enable/disable module 40 for selectively enabling and disabling the voice recognition module 34. Modules 34, 38 and 40 may be software implemented.

Voice recognition module 34 is programmable to recognise one or more words uttered by one or more individuals to indicate that the individual is under personal attack. Thus, the voice recognition module 34 preferably includes means for enabling the owner or users of the telephone 8 or 11 to cause the pre-selected utterances, such as a shout for "help" to be stored so that this can be recognised. In response to such shout for help or other indication of a personal attack, voice recognition module 34 activates an auto-dial module 38 so that mobile telephone 8 or 11 dials the telephone number of monitor station 2. In the case of the mobile telephone 8, the person under attack can then call out his location so that personnel at the central monitoring station 2 can inform the police of where the attack is taking place. In the case of the domestic telephone 11 the system may be arranged to indicate to the central station to the location of the telephone 11 generating the alarm signal or alternatively the person under attack can call out his location.

Preferably the mobile telephone 8 also incorporates a global positioning system (GPS), which is not shown in the accompanying drawings, and which is arranged to provide an indication of the location of the telephone utilising existing satellites. Preferably the telephone 8 is arranged to transmit to the monitor station 2 an indication of the precise position of the telephone when an alarm signal is generated. In this way, help can be sent directly to the person under attack or otherwise needing assistance.

Module 40 is arranged to enable voice recognition module 34 when the telephone 8 or 11 is in its standby mode and to disable module 34 when the mobile telephone 8 or 11 is in use, thus ensuring that the auto-dial module 38 is not inadvertently actuated by use during a telephone conversation of the word which the module 34 is programmed to recognise.

Thus, with the invention, the constraints suffered by the personal attack button of conventional alarm systems are avoided. By incorporating the invention in telephones, personal attack sensors may be easily provided in different rooms in a building without the need for special wiring for the alarm system. By incorporating the invention in a mobile telephone, users can readily summons help if attacked in any location.

Various modifications are possible within the scope of the invention. For example, although the personal attack sensor 18 has been shown in Fig. 2 as comprising a microphone, amplifier, voice recogniser and switch, the sensor 18 may consist only of the microphone and the voice recognition operation may be performed in the control unit 20.

## Claims

1. A telephone (8,11) **characterised in that** it incorporates an alarm providing means (Fig. 3) which is operable with the telephone in standby mode, the alarm providing means comprising a microphone (36), voice recognition means (34) coupled to the microphone and programmable to recognise a predetermined sound uttered by a person, means for generating an alarm signal in response to recognition of said predetermined sound, and automatic dialling means (38) for dialling a predetermined telephone number in response to generation of said alarm signal.

2. A telephone according to claim 1, including enabling/disabling means (40) which disables the alarm providing means when the telephone is in use and enables the alarm providing means when the telephone is in standby mode.

3. A telephone according to claim 1, including means (40) for selectively enabling or disabling the alarm providing means.

4. A telephone according to any preceding claim, wherein the microphone (36) also serves as the microphone of the telephone (8,11).

5. A telephone according to any preceding claim which is a mobile telephone (8).

6. A telephone according to any of claims 1 to 5, incorporating a global positioning system and means for sending a signal indicative of the position of the telephone to the automatically dialled number.

7. A telephone according to claim 1, 2 or 3, wherein said telephone (11) is a non-mobile telephone.

8. A telephone according to claim 6, wherein said non-mobile telephone (11) is of the cordless type.

9. A telephone according to claim 6, wherein said non-mobile telephone (11) is of the non-cordless type.

10. A telephone according to any of claims 1 to 4 or 7 to 9, which is installed in a building for sensing said predetermined sound uttered by an individual in said building.

11. An alarm system comprising a monitoring station (2) coupled to a telephone network (4) and having a telephone number, and at least one telephone (8,11) according to any preceding claim coupled to said network with the automatic dialling means (2) arranged for dialling the telephone number of the monitor station:

## Patentansprüche

1. Telefon (8, 11), **dadurch gekennzeichnet, daß** es eine Alarm-abgebende Einrichtung (Fig. 3) enthält, die betreibbar ist, während sich das Telefon im Standby-Modus befindet, und die ein Mikrophon (36), eine mit diesem gekoppelte und zur Erkennung eines vorgegebenen, von einer Person abgegebenen Lauts programmierbare Spracherkennungseinrichtung (34), eine Einrichtung zur Erzeugung eines Alarmsignals in Reaktion auf die Erkennung des vorgegebenen Lauts und eine automatische Wähleinrichtung (38) zum Wählen einer vorgegebenen Telefonnummer in Reaktion auf die Erzeugung des Alarmsignals enthält.

2. Telefon nach Anspruch 1 mit einer Freigabe/Sperr-Einrichtung (40), die die Alarm-abgebende Einrichtung sperrt, wenn sich das Telefon in Benutzung befindet, und die Alarm-abgebende Einrichtung freigibt, wenn sich das Telefon im Standby-Modus befindet.

3. Telefon nach Anspruch 1 mit einer Einrichtung (40) zum wahlweisen Freigeben oder Sperren der Alarm-abgebenden Einrichtung.

4. Telefon nach einem der vorhergehenden Ansprüche, wobei das Mikrophon (36) auch als Mikrophon des Telefons (8, 11) dient.

5. Telefon nach einem der vorhergehenden Ansprüche, das ein Mobiltelefon (8) darstellt.

6. Telefon nach einem der Ansprüche 1 bis 5, das ein globales Positionserkennungssystem und eine Einrichtung zum Aussenden eines die Position des Telefon angebenden Signals an die automatisch gewählte Nummer enthält.

7. Telefon (11) nach Anspruch 1, 2 oder 3, das ein Festnetz-Telefon darstellt.

8. Telefon nach Anspruch 7, wobei das Festnetz-Telefon (11) schnurlos ist.

9. Telefon nach Anspruch 7, wobei das Festnetz-Telefon (11) nicht schnurlos ist.

10. Telefon nach einem der Ansprüche 1 bis 4 oder 7 bis 9, das in einem Gebäude installiert ist, um einen vorgegebenen Laut zu erfassen, der von einem Lebewesen in dem Gebäude abgegeben wird.

11. Alarmsystem mit einer mit einem Telefonnetz (4) gekoppelten und eine Telefonnummer aufweisenden Überwachungsstation (2) und mindestens einem mit dem Netz gekoppelten Telefon (8, 11) nach einem der vorhergehenden Ansprüche, wobei die automatische Wähleinrichtung (3) zum Wählen der Telefonnummer der Überwachungsstation eingerichtet ist.

## Revendications

1. Téléphone (8, 11) **caractérisé en ce qu'**il comporte un moyen de fourniture d'alarme (figure 3) qui est mis en oeuvre lorsque le téléphone se trouve dans un mode de veille, le moyen de fourniture d'alarme comprenant un microphone (36), un moyen de reconnaissance vocale (34) relié au microphone et programmable afin de reconnaître un son prédéterminé émis par une personne, un moyen destiné à générer un signal d'alarme en réponse à une reconnaissance dudit son prédéterminé, et un moyen de composition automatique (38) destiné à composer un numéro de téléphone prédéterminé en réponse à la génération dudit signal d'alarme.

2. Téléphone selon la revendication 1, comprenant un moyen d'activation/désactivation (40) qui désactive le moyen de fourniture d'alarme lorsque le téléphone est en utilisation et qui active le moyen de fourniture d'alarme lorsque le téléphone est en mode de veille.

3. Téléphone selon la revendication 1, comprenant un moyen (40) destiné à activer ou désactiver sélectivement le moyen de fourniture d'alarme.

4. Téléphone selon l'une quelconque des revendications précédentes, dans lequel le microphone (36) sert également de microphone du téléphone (8, 11).

5. Téléphone selon l'une quelconque des revendications précédentes, qui est un téléphone mobile (8).

6. Téléphone selon l'une quelconque des revendications 1 à 5, comprenant un moyen de positionnement mondial et un moyen destiné à envoyer un signal indiquant la position du téléphone vers le numéro composé automatiquement.

7. Téléphone selon la revendication 1, 2 ou 3, dans lequel ledit téléphone (11) n'est pas un téléphone mobile.

8. Téléphone selon la revendication 6, dans lequel ledit téléphone qui n'est pas un téléphone mobile (11) est du type sans fil.

9. Téléphone selon la revendication 6, dans lequel ledit téléphone qui n'est pas un téléphone mobile (11) n'est pas du type sans fil.

10. Téléphone selon l'une quelconque des revendications 1 à 4 ou 7 à 9, lequel est installé dans un immeuble afin de détecter ledit son prédéterminé émis par un individu dans ledit immeuble.

11. Système d'alarme comprenant un poste de surveillance (2) relié à un réseau téléphonique (4) et ayant un numéro de téléphone, et au moins un téléphone (8, 11) selon l'une quelconque des revendications précédentes, relié audit réseau, le moyen de composition automatique (2) étant conçu pour composer le numéro de téléphone du poste de surveillance.
